# FASCICULE DE BREVET EUROPEEN

(11) **EP 4 090 941 B1**
(45) Date de publication et mention de la délivrance du brevet: **19.08.2026**
(21) Numéro de dépôt: 21719701.1
(22) Date de dépôt: 15.01.2021
(51) Int. Cl.: G01N 15/14, G01N 21/64, G01N 15/10

(54) **DISPOSITIF ÉLECTRO-OPTIQUE DE MESURES EN FLUX**
ELEKTRO-OPTISCHES DURCHFLUSSMESSGERÄT
ELECTRO-OPTICAL DEVICE FOR FLOW MEASUREMENTS

(30) Priorité: 17.01.2020 FR 2000487
(43) Date de publication de la demande: 23.11.2022
(73) Titulaire: HORIBA ABX SAS, 34790 Grabels (FR)
(72) Inventeur: GENNEVAUX, Philippe, 34184 Montpellier (FR); RONGEAT, Nelly, 34184 Montpellier (FR)
(74) Mandataire: Plasseraud IP
(86) Numéro de dépôt international: PCT/FR2021/050077
(87) Numéro de publication internationale: WO 2021/144545

(56) Documents cités:
- US-A1- 2013 308 122
- US-A1- 2017 343 475
- US-A1- 2018 348 112

## Description

L'invention concerne le domaine des dispositifs électro-optiques de mesures en flux pour la caractérisation de microparticules, notamment de cellules biologiques comprenant une chambre de mesure dans laquelle circule le flux du fluide à caractériser et contenant les cellules à caractériser. Ce domaine s'appuie sur l'utilisation de méthodes d'analyse fondées sur l'utilisation de mesures électriques et optiques pour compter et différencier les cellules présentes dans un échantillon à analyser.

La présente invention se rapporte plus spécifiquement à un dispositif électro-optique multiparamétrique pour le comptage et la caractérisation cellulaire. Le fluide à caractériser est préférentiellement un échantillon sanguin, mais il peut être également un liquide biologique d'une autre nature du type liquide cérébrospinal, urine, liquide pleural, liquide synovial, une suspension cellulaire, moelle osseuse etc. L'échantillon peut également contenir des particules de toute nature (cellules, protéines, biomarqueurs, etc.) qu'il sera nécessaire de différencier et de compter.

Plus précisément, l'invention concerne les dispositifs comprenant au moins deux sources lumineuses, un dispositif de mesure de résistivité ou d'impédance et plusieurs détecteurs permettant la mesure de paramètres optiques, typiquement des mesures d'extinction, des mesures de diffractions aux grands angles et des mesures de fluorescence.

Ces mesures permettent la caractérisation et le comptage des cellules biologiques ou des particules présentes dans le fluide.

Les mesures d'impédance électriques permettent le comptage des particules et d'obtenir des renseignements sur leurs tailles.

Les paramètres optiques (réfraction, diffusion, absorption et réflexion) permettent d'extraire des informations morphologiques des cellules telles que la forme, le volume, la taille et la structure interne. Les sources lumineuses (telle que des lasers, des sources halogènes ou des diodes électroluminescentes) permet de générer une lumière qui va être focalisée par des lentilles et illuminer les cellules biologiques défilant dans une cuve de mesure. Au contact de la cellule biologique, la lumière interagit avec la cellule. Dans l'axe incident du faisceau lumineux, la lumière est collectée par plusieurs lentilles et peut être filtrée spatialement par des diaphragmes pour être détectée grâce à un détecteur photodiode. Cette mesure, dans la gamme d'angles choisie, donne une indication sur la taille de l'élément biologique combiné à une information de structure. De plus, une autre mesure peut être effectuée dans l'axe incident du faisceau lumineux. La lumière incidente est bloquée par un stop (beam stopper en anglais) et les signaux diffusés par les cellules sont détectés sur un capteur de type photodiode pour générer la mesure de FSC (Forward Scatter). Cette mesure, dans la gamme d'angles choisie, donne une indication sur la taille de l'élément biologique et/ou peut servir de déclenchement de la mesure pour des petites particules. Une autre partie de la lumière est collectée de façon orthogonale et passe au travers d'un autre ensemble de lentilles, et d'un jeu de miroirs semi-réfléchissants, pour être mesurée au niveau d'un capteur pour générer le signal SSC (Side Scatter). Cette mesure de lumière orthogonale, donne une indication sur la densité de l'élément biologique ainsi que sur sa granularité (structure) ou sur son contenu intracellulaire.

La mesure de la fluorescence est utilisée pour la mise en évidence de colorants fluorescents utilisés comme marqueurs des cellules ou comme sondes moléculaires spécifique d'une structure ou d'une fonction de l'élément biologique. Par exemple, si on utilise un anticorps spécifique d'une certaine classe cellulaire, couplé à un fluorochrome, on pourra mettre en évidence cette classe cellulaire, c'est-à-dire caractériser la cellule précisément et la compter. L'utilisation de plusieurs fluorescences simultanément permet de mieux caractériser les cellules biologiques d'intérêt.

Lorsque le fluide est un échantillon de sang on détermine quantitativement (numération) et qualitativement (formule) les éléments figurés du sang que sont les lignées des globules rouges (ou érythrocytes), des globules blancs (ou leucocytes) et des plaquettes (ou thrombocytes). Cette analyse est dénommée un hémogramme ou numération formule sanguine (NFS). Les anormalités de la NFS peuvent alerter le médecin sur des pathologies latentes (anémies, cancers, etc.).

Toutes ces cellules sont issues d'une même cellule souche située dans la moelle osseuse, appelée hémocytoblaste. Ces cellules souches se différencient ensuite en plusieurs sous-populations.

Ainsi, dans le cas des cellules hématopoïétiques, l'homme de l'art sait que l'analyse de la cellule, obtenue par impédance, diffraction ou d'absorption, permet la discrimination des principales lignées cellulaires incluant les érythrocytes ou globules rouges, les thrombocytes ou plaquettes et les leucocytes ou globules blancs. Cette dernière population est elle-même subdivisée en plusieurs catégories telles que, par exemple, les lymphocytes, les monocytes, les neutrophiles, les éosinophiles et les basophiles. Le sang est normalement composé de cellules matures qui ne se divisent plus.

Le comptage et la différenciation cellulaire peuvent être réalisés en déterminant simultanément le volume et l'extinction apparente en lumière blanche tel que décrit dans le brevet US 5,138,181 déposé par la Demanderesse. Un dispositif développé dans un mode de réalisation en lumière quasi monochromatique est par exemple décrit dans le brevet WO 2006/053960.

D'autres dispositifs exemplaires sont décrits dans US 2013/308122 et US 2018/348112 A1.

Pour chacun des types cellulaires cités plus haut, on connait les différents niveaux de maturation. Ainsi, les globules rouges, encore appelés érythrocytes, ou hématies, sont d'abord fabriqués sous forme de proérythroblastes, puis d'érythroblastes basophiles, puis encore d'érythroblastes polychromatophiles, qui évoluent en érythroblastes acidophiles, puis en réticulocytes obtenus après l'expulsion du noyau de l'érythroblaste acidophile. Ce sont ces réticulocytes qui, après perte totale de l'ARN résiduel, se différencient dans le sang circulant en érythrocytes.

Les globules blancs ou leucocytes sont issus de la moelle osseuse sous la forme préalable de myéloblastes qui donneront ensuite les pro-granulocytes qui se transformeront alors en granulocytes basophiles, éosinophiles ou neutrophiles, d'abord non segmentés puis dont les noyaux vont de plus en plus se segmenter au fur et à mesure de leur maturation.

Ces myéloblastes sont également à l'origine de la lignée monocytaire qui donnera les monoblastes, les promonocytes puis les monocytes qui passeront dans le sang périphérique.

La cellule souche pluripotente dont est originaire le myéloblaste, donne également naissance à la lignée lymphocytaire par une différenciation sous forme de cellule souche lymphoïde dont une partie de sa lignée, lignée des lymphocytes T, ira continuer sa maturation dans le thymus et les ganglions et l'autre partie restera dans la moelle osseuse afin de donner la lignée des lymphocytes B. Ces lymphocytes B, une fois activés sous la forme de plasmocytes, produisent les anticorps pour combattre les antigènes pathogènes.

Les plaquettes sanguines, ou thrombocytes, proviennent, quant à elles, des mégacaryoblastes, eux-mêmes issus du progéniteur myéloïde dont est originaire le myéloblaste, qui, une fois arrivé au stade ultime de leur maturation, que sont mégacaryocytes thrombocytogènes, produisent des plaquettes par délitement de leurs cytoplasmes. Les plaquettes jeunes, plaquettes réticulées, contiennent une charge en ARN qui est le reliquat de leur cellule d'origine.

Le diagnostic de certaines pathologies nécessite la numération et la caractérisation de plus en plus fine des cellules hématopoïétiques dans le sang circulant. En particulier, il devient nécessaire de pouvoir mettre en évidence des populations spécifiques telles que les réticulocytes et les érythroblastes qui sont les versions immatures des érythrocytes. De même, la mise en évidence de cellules immatures, précurseurs des leucocytes, appelés lymphocytes, monocytes ou granulocytes immatures revêt une grande importance. La classification et le comptage des lymphocytes activés ou encore des plaquettes réticulées permettrait également d'améliorer véritablement le diagnostic des patients.

Le marquage fluorescent spécifique de cellules permet d'apporter une grande spécificité ainsi que la détection de cellules immatures ou atypiques. Ainsi, les différents types de lymphocytes peuvent être caractérisés précisément et comptabilisés en utilisant des anticorps spécifiques couplés à un fluorochrome. D'autres cellules anormalement rencontrées dans le sang comme par exemple des lymphocytes atypiques ou des cellules immatures précurseurs, peuvent être également détectées après un marquage en fluorescence. De même, les plaquettes réticulées peuvent être marquées spécifiquement par un fluorochrome.

Afin de mieux différencier chacune des populations particulaires contenues dans un échantillon, la Demanderesse a proposé un dispositif électro-optique de mesures en flux dans la demande de brevet FR 2 971 337. Ce dispositif présente de nombreux avantages. Néanmoins, de par sa configuration, ce dispositif est compliqué à régler et offre un accès très limité à la cuve de mesure.

L'invention vient améliorer la situation.

A cet effet, l'invention propose un dispositif électro-optique de mesures en flux comprenant une cuve de mesure dans laquelle circule un flux de fluide à caractériser, au moins deux canons d'émission de lumière présentant des spectres disjoints, un canon de déclenchement permettant la mesure de la diffraction aux petits angles et un canon de réception permettant de réaliser une mesure d'extinction et au moins une fluorescence.

Ce dispositif électro-optique est tel que :
- le premier canon d'émission comprend une source lumineuse présentant la longueur d'onde centrale supérieure à 580nm et définissant un axe optique principal perpendiculaire au flux de fluide,
- le deuxième canon d'émission comprenant une seconde source lumineuse, présentant une longueur d'onde centrale inférieure à 580nm et définissant un axe optique secondaire sensiblement orthogonal à l'axe optique principal et au flux de fluide,
- le premier canon d'émission et le deuxième canon d'émission sont disposés d'un côté de la cuve de mesure, le canon de réception est disposé de l'autre côté de la cuve de mesure selon l'axe optique principal, et le canon de déclenchement est disposé de l'autre côté de la cuve de mesure selon l'axe optique secondaire,
- le canon de réception comprend un canal de détection pour mesurer l'extinction et au moins un canal de détection pour mesurer au moins un signal de fluorescence, ainsi qu'un unique objectif de collection du faisceau provenant de l'interaction du faisceau lumineux entre le premier canon d'émission et le deuxième canon d'émission et les particules dans le flux de fluide, lequel objectif de collection est agencé de sorte que le faisceau lumineux qu'il transmet est un faisceau substantiellement collimaté selon l'axe optique principal vers le canal de détection pour mesurer l'extinction, le canon de réception formant un seul bloc mécanique dont une partie au moins est mobile par rapport à la cuve de mesure, le canon de réception comprenant en outre un premier miroir dichroïque placé en aval de l'objectif de collection là où le faisceau lumineux est substantiellement collimaté, agencé pour transmettre partiellement le faisceau lumineux issu de l'interaction entre le premier canon d'émission et les particules dans le flux de fluide vers le canal de détection pour mesurer l'extinction, et pour réfléchir partiellement le faisceau lumineux issu de l'interaction entre le deuxième canon d'émission et les particules dans le flux de fluide vers au moins un canal de détection pour mesurer au moins un signal de fluorescence.

Ce dispositif est avantageux car il offre un accès libre à la cuve de mesure, ainsi qu'un réglage aisé grâce à la réalisation du canon de réception sous la forme d'un unique bloc mécanique. De plus, il offre une robustesse accrue par rapport au dispositif la demande de brevet FR 2 971 337.

Dans diverses variantes, l'invention peut présenter une ou plusieurs des caractéristiques suivantes :
- le canon de réception comprend un canal de détection pour mesurer la diffraction aux grands angles et un second miroir dichroïque placé en aval de l'objectif de collection et agencé pour réfléchir partiellement le faisceau lumineux issu de l'interaction entre le deuxième canon d'émission et les particules dans le flux de fluide vers au moins un parmi l'au moins un canal de détection pour mesurer la fluorescence et le canal de détection pour mesurer la diffraction aux grands angles,
- le canal de détection pour mesurer l'extinction comprend un détecteur agencé pour mesurer une quantité de lumière rouge, l'au moins un canal de détection pour mesurer au moins une fluorescence comprenant un détecteur agencé pour mesurer une quantité de lumière verte et une quantité de lumière orange ou proche infrarouge, et le canal de détection pour mesurer la diffraction aux grands angles comprend un détecteur agencé pour mesurer une quantité de lumière bleue,
- le détecteur agencé pour mesurer une quantité de lumière rouge est une photodiode, le détecteur agencé pour mesurer une quantité de lumière verte est un photomultiplicateur ou un photomultiplicateur en silicium, et le photodétecteur agencé pour mesurer une quantité de lumière bleue est une photodiode,
- le canon de réception est monobloc et est mobile intégralement par rapport à la cuve de mesure,
- le deuxième miroir dichroïque est placé en aval du premier miroir dichroïque dans le trajet du faisceau réfléchi et est agencé pour réfléchir partiellement celui-ci vers le canal de détection pour mesurer la fluorescence et pour transmettre partiellement celui-ci vers le canal de détection pour mesurer la diffraction aux grands angles,
- le canal de détection pour mesurer l'extinction, un ou plusieurs canaux de détection pour mesurer un ou plusieurs signaux de fluorescence et le canal de détection pour mesurer la diffraction aux grands angles comprennent chacun une optique suivie d'un diaphragme en amont de leur détecteur respectif,
- l'objectif de collection comprend deux lentilles dont l'une est mobile par rapport à la cuve de mesure, le reste du canon de réception ne présentant pas de mobilité par rapport à la cuve de mesure, et un diaphragme disposé en aval des deux lentilles,
- le deuxième miroir dichroïque est placé en amont du premier miroir dichroïque dans le trajet du faisceau réfléchi et est agencé pour réfléchir partiellement celui-ci vers le canal de détection pour mesurer la diffraction aux grands angles et pour transmettre partiellement celui-ci vers le premier miroir dichroïque,
- le premier canon d'émission comprend une première source d'émission qui est une LED rouge,
- le deuxième canon d'émission comprend une deuxième source d'émission qui est un laser bleu,
- le dispositif comprend en outre un ou plusieurs éléments de réglage agencés pour permettre le réglage du dispositif par déplacement de tout ou partie du canon de réception et mesure dans le canal de détection, et
- le dispositif comprend en outre un ou plusieurs miroirs agencés pour décaler un ou plusieurs faisceaux substantiellement collimatés.

D'autres caractéristiques et avantages de l'invention apparaîtront mieux à la lecture de la description qui suit, tirée d'exemples donnés à titre illustratif et non limitatif, tirés des dessins sur lesquels :
- [Fig 1] représente un premier mode de réalisation d'un dispositif selon l'invention,
- [Fig 2] représente un deuxième mode de réalisation d'un dispositif selon l'invention,
- [Fig 3] représente un troisième mode de réalisation d'un dispositif selon l'invention.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

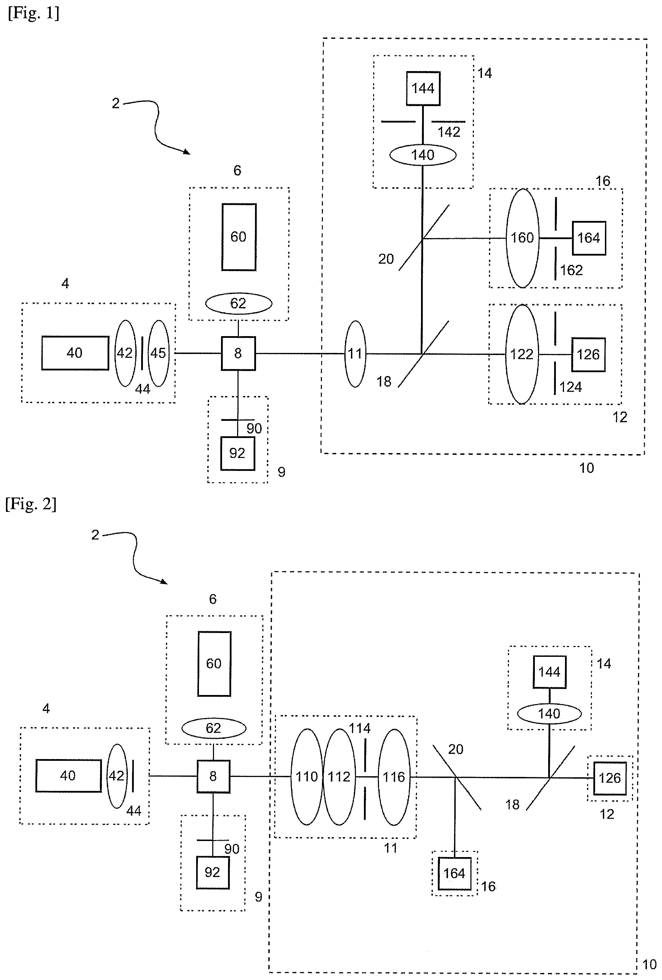

La figure 1 représente un premier mode de réalisation d'un dispositif selon l'invention. Le dispositif 2 comprend un premier canon d'émission 4 et un deuxième canon d'émission 6 disposés d'un côté d'une cuve de mesure 8, un canon de déclenchement 9 et un canon de réception 10 disposé de l'autre côté de la cuve de mesure 8. Le canon de réception 10 comprend un objectif de collection 11, trois canaux de détection référencés 12, 14 et 16, ainsi que des miroirs dichroïques 18 et 20 décrit plus bas permettant de séparer le faisceau lumineux se propageant dans la cuve de mesure 8 en plusieurs faisceaux lumineux ayant des longueurs d'ondes différentes (dans l'exemple décrit ici rouges, bleues, vertes) et spécifiques à chacun des trois canaux de détection 12, 14 et 16. Le canal de détection 12 est utilisé pour mesurer l'extinction, le canal de détection 14 est utilisé pour mesurer la fluorescence, et le canal de détection 16 est utilisé pour mesurer la diffraction à 90° (également appelée SSC).

Dans l'exemple décrit ici, le premier canon d'émission 4 comprend une première source d'émission 40, une optique de mise en forme 42 et un réticule 44 et une optique de focalisation 45 qui sert à réduire la taille du rectangle issu du réticule 44 qui est projeté sur la cuve de mesure 8.

La première source d'émission 40 est dans l'exemple décrit ici une LED rouge Epitex SMB660NR-1100 et a une distribution d'intensité proche de celle d'une source lambertienne, permettant d'obtenir l'uniformité recherchée. Le spectre d'émission de la LED 40 est large et centré sur 660nm. Le chip de la LED 40 a une surface active de 1x1mm². La puissance optique délivrée par la LED 40 en sortie du premier canon d'émission 4, c'est-à-dire au centre de la cuve de mesure 8 est de 45µW. D'une manière générale, cette première source d'émission présente un spectre d'émission avec une longueur d'onde centrale supérieure à 580nm. A l'inverse, comme on le verra plus bas, la deuxième source d'émission présente un spectre d'émission avec une longueur d'onde centrale inférieure à 580nm. Cette dichotomie est réalisée afin de pouvoir séparer une mesure dans le rouge et une mesure dans le bleu ou le vert.

L'optique de mise en forme 42 comprend dans l'exemple décrit ici deux lentilles de collection située entre la LED 40 et le réticule 44. Ces deux lentilles projettent le diaphragme d'ouverture, ce qui permet d'assurer l'uniformité du faisceau illuminant le flux de cellule biologique se propageant dans la cuve de mesure 8. Pour tenir compte du fait que le spectre de la LED 40 recouvre une partie du spectre d'émission de fluorescence du Thiazole Orange, et limiter le bruit résultant sur le canal de détection 14 de mesure de la fluorescence, un filtre coloré ou interférentiel peut être optionnellement placé entre les deux lentilles de l'optique de mise en forme 42, là où les faisceaux lumineux sont collimatés. Cela permet de couper la composante verte de la LED 40.

Le réticule 44 est dans l'exemple décrit ici de forme rectangulaire (150x500µm²). Ainsi, en combinaison avec la LED 40 et l'optique de mise en forme 42, le grandissement paraxial du système jusqu'aux cellules est de 0,172. L'image paraxiale du réticule 44 sur le flux de cellules est donc un rectangle de 86µm x 25,8µm (respectivement 500µm x 0,172 et 150µm x 0,172). D'autre part, la simulation sur ZEMAX montre qu'un système « *réel »* parfait (limité par la diffraction) devrait donner une tâche de 90µm x 28,8 µm (taille obtenue avec Zemax Cross X et cross Y en pied de courbe). Les mesures expérimentales des dimensions de l'image sont très proches de celles produites par un système « *réel »* parfait.

Au niveau de la cuve de mesure 8, le faisceau provenant d'un point de la LED 40 (correspondant à l'image de la LED 40 et sans réticule) est collimaté, ce qui signifie que le diaphragme d'ouverture est projeté à l'infini. Cela a été conçu en faisant coïncider son image avec le foyer du système.

Le premier canon d'émission 4 permet avec le canon de détection 12 de mesurer l'extinction d'un faisceau LED autour de 660nm par des cellules biologiques en mouvement. Cette mesure est améliorée grâce au contrôle précis de la forme du faisceau et de l'uniformité d'éclairement au niveau des cellules.

Dans l'exemple décrit ici, le canon de détection 12 pour mesurer l'extinction est situé en aval du miroir dichroïque 18 du canal de réception 10, et comprend une lentille de focalisation 122, un diaphragme 124 et un détecteur 126.

Dans l'exemple décrit ici, le miroir dichroïque 18 est un filtre Semrock FF605-Di02, qui transmet vers le canal de détection 12 la partie du faisceau collimaté par l'objectif de collection 11 qui présente une longueur d'onde supérieure à 605nm, tandis que l'autre partie du faisceau collimaté par l'objectif de collection 11 qui présente une longueur d'onde inférieure à 605nm est réfléchie vers le canal de détection 14 et le canal de détection 16. Le miroir dichroïque 18 décrit ici transmet 98% du rouge tandis qu'il réfléchit 99% du bleu et du vert. Conformément aux spécifications du miroir dichroïque 18, l'objectif de collection 11 collimate le faisceau issu de la cuve de mesure 8, de sorte que celui-ci arrive sur le filtre 18 avec un demi-angle inférieur à 2°.

Dans l'exemple décrit ici, le filtre passe-bande 120 est un filtre interférentiel passe-bande Semrock FF01-655/40 qui permet de transmettre seulement les longueurs d'onde rouge (de 635 nm à 675 nm) provenant de la LED 40. Dans l'exemple décrit ici, la lentille de focalisation 122 focalise le faisceau lumineux dans le diaphragme 124 qui mesure 1mm de diamètre et est positionné à 22 mm de celle-ci. Dans l'exemple décrit ici, la lentille de focalisation 122 est un modèle réalisé sur commande. Cette lentille plan convexe a un rayon de courbure de 12,42mm en matériau N-BK7. Néanmoins, d'autres lentilles pourront être utilisées. Enfin, le détecteur 126 de l'exemple décrit ici est une photodiode Hamamatsu S1223 située à 6,75mm du diaphragme 124 et donc du point focal. Le demi-angle du faisceau entrant dans le canal de détection 12 est inférieur aux 7° prescrits pour le filtre passe bande 120, et l'ouverture numérique de ce faisceau en sortie de la cuve de mesure est limitée à 0,31 grâce à un diaphragme dans le canon de réception 12.

Dans l'exemple décrit ici, le deuxième canon d'émission 6 comprend une deuxième source d'émission 60, et une optique de mise en forme 62.

La deuxième source d'émission 60 est dans l'exemple décrit ici une source laser bleu qui comprend une diode laser d'une puissance de 50mW émettant à 488nm de la marque Osram, dont la sortie est mise en forme par des lentilles anamorphiques afin que le faisceau soit elliptique en sortie de la source laser 60.

L'optique de mise en forme 62 comprend dans l'exemple décrit ici une lentille sphérique de focale 75 mm, par exemple un doublet Thorlabs AC127-075-A. Le fait d'avoir une lentille avec une focale assez élevée permet d'avoir une profondeur de champ plus grande au niveau de l'interaction cellules biologiques et faisceau lumineux. L'ellipse a alors une taille d'environ 200µm x 30µm (à 1/e²) dans la cuve de mesure et une polarisation verticale.

La source laser 60 présente l'avantage d'être au point focal dans le flux de cellule de la cuve de mesure 8, ce qui permet d'obtenir une qualité de faisceau supérieure et une reproductibilité meilleure. De plus, cela permet d'obtenir des tolérances sur le positionnement latéral et longitudinal élevées. En effet, le positionnement latéral est favorisé grâce à la longueur du faisceau laser dans la cuve de mesure (ellipse aplatie), et la tolérance longitudinale dépend de la distance entre laser et cuve de mesure.

La source laser 60 est utilisée par le canal de détection 14 de mesure de fluorescence, et par le canal de détection 16 de mesure de diffraction à 90°. Ces deux canaux de détection traitent la partie du faisceau collimaté par l'objectif de collection 11 qui présente une longueur d'onde inférieure à 605nm et qui est réfléchie par le miroir dichroïque 18. Le miroir dichroïque 20 est placé en aval du miroir dichroïque 18 dans le chemin du faisceau utilisé pour séparer ce faisceau en deux. Dans l'exemple décrit ici, le miroir 20 est un filtre Semrock FF506-Di03 qui réfléchit les longueurs d'onde inférieures à 506 nm et transmet les longueurs d'ondes supérieures à 506nm.

Ainsi, le canal de détection 14 pour la mesure de fluorescence, mesure des longueurs d'onde dans le vert provenant de la fluorescence du Thiazole Orange marquant les acides nucléiques des cellules biologiques. Ainsi, le canal de détection 14 est disposé dans l'axe du faisceau réfléchi par le miroir dichroïque 18. Le canal de détection 14 comprend un doublet de lentilles 140, un diaphragme 142 et un détecteur 144. Le doublet de lentilles 140 permet de focaliser le faisceau transmis par le miroir dichroïque 20 dans le diaphragme 142 qui présente un diamètre de 1,5mm. Le diaphragme 142 assure le filtrage spatial et permet d'obtenir un rapport signal à bruit élevé. Le signal de fluorescence est ensuite mesuré par le détecteur 144 qui est dans l'exemple décrit ici un photomultiplicateur Hamamatsu H10723. L'ouverture numérique du canal de détection 14 est de 0,6.

La partie du faisceau qui est réfléchi par le miroir dichroïque 20 est dirigée vers le canal de détection 16 pour la mesure de diffraction à 90° provenant de l'interaction laser-cellules biologiques dans le bleu.

Le canal de détection 16 comprend dans l'exemple décrit ici une lentille de focalisation 160, un diaphragme 162 et un détecteur 164. La lentille de focalisation 160 est dans l'exemple décrit ici une lentille de référence Thorlabs LA-1270-A et le diaphragme 162 présente un diamètre de 1,5mm, tandis que la photodiode 164 est une photodiode Hamamatsu S1223. Ici encore, le diaphragme 162 assure le filtrage spatial et permet d'obtenir un rapport signal à bruit élevé.

Comme mentionné plus haut, l'objectif de collection 11 en aval de la cuve de mesure 8 est commun aux canaux de détection 12, 14 et 16. Dans l'exemple décrit ici, l'objectif de collection 11 a une ouverture numérique assez importante de 0,6, afin de collecter un maximum de flux émis depuis la cuve de mesure 8. La distance de focalisation de cet objectif est choisie suffisamment grande pour pouvoir faciliter l'accès à la cuve de mesure (la distance entre la cuve de mesure et le doublet étant de 5,2mm dans l'exemple décrit ici). Dans l'exemple décrit ici, l'objectif de collection 11 est un doublet de lentilles qui permet aussi de limiter les aberrations chromatiques étant donné que les longueurs d'onde présentes sont variées (de 488nm à 700nm).

Le réglage du canon de réception 10 est réalisé avec un diaphragme de diamètre 0,3mm (non représenté sur la figure 1), qui est introduit à la place du diaphragme 124 du canon de détection 12. L'utilisation d'un diaphragme de diamètre faible (0,3mm) permet d'avoir une précision d'ajustement élevée. La position optimum du canon de réception 10 correspond au maximum d'intensité détectée par la photodiode 126. Pour ce faire, la position de la cuve de mesure 8 par rapport au canon de réception 10 est ajustée dans les trois axes au moyen d'un dispositif de déplacement du bloc mécanique qui reçoit tous les éléments du canal de réception 10. Cela permet d'ajuster les trois détecteurs avec un seul ajustement précis. Ce réglage est simplifié étant donné qu'il utilise le même détecteur que le détecteur extinction 126. Ceci évite de devoir utiliser du matériel encombrant comme par exemple une caméra, cela est notamment intéressant pour les personnes du service après-vente.

De manière optionnelle, des filtres passe-bande dédiés à l'extinction 120 (Rouge), à la diffraction à 90° (SSC) (Bleu) et à la fluorescence (Vert) ont une transmission respective de 85%, 90% et 96% peuvent être ajoutés dans les canaux de détections respectifs 12, 14 et 16. Ainsi, compte tenu des caractéristiques des miroirs dichroïques 18 et 20, pour une réflexion de 1% sur les interfaces des lentilles, la transmission est de 78% en extinction, de 83% en diffraction et de 86% en fluorescence.

En extinction, le pourcentage de lumière parasite est de 2.10⁻⁶% dans le bleu et dans le vert. En diffraction à 90°, ce pourcentage est de 2.10⁻⁶% dans le rouge et 9.10⁻³% dans le vert. Le signal de fluorescence étant faible, le gain du photomultiplicateur 144 est assez élevé, c'est pour cela qu'il est important de tenir compte de la lumière parasite dans ce canal, particulièrement du bleu lié au laser, elle est de 3.10⁻⁴% dans le bleu et dans le rouge.

Le canal de déclenchement 9 comprend un bloqueur de faisceau 90 et un détecteur 92. La détection de signal dans l'axe à 488 nm est utilisée dans l'exemple décrit ici comme signal de déclenchement. Le canal de déclenchement 9 comprend un bloqueur de faisceau (beam blocker en anglais) pour supprimer le faisceau incident du laser. Le bloqueur de faisceau est dans l'exemple décrit ici une barre verticale de largeur 0,8mm située à 5,5mm de la cuve de mesure 8 dans l'axe de la source laser 60. Sa largeur est suffisante pour bloquer le faisceau laser de la source 60 dont la taille sur l'axe horizontal est assez stable et reste inférieur à 300µm. Le détecteur 92 est dans l'exemple décrit ici, une photodiode Hamamatsu S1223 qui permet de réaliser une mesure de diffraction aux petits angles (également appelée FSC).

Les études cliniques de la Demanderesse ont démontré que ce dispositif permet un différentiel leucocytaire : les LMNE (lymphocyte, monocyte, neutrophile, éosinophiles), Baso (basophiles), IG (immatures granuleux), LYA (lymphocytes atypiques), HRC (haute teneur en ARN, en anglais High RNA content), ERB (érythroblastes). Le dispositif permet de discriminer les érythrocytes et 3 indices de maturation des réticulocytes, et les plaquettes.

De plus, ce dispositif, avec son canon de réception 10 monobloc est nettement plus aisé à régler que les dispositifs connus, tout en offrant un accès à la cuve de mesure 8 bien plus important, ce qui facilite grandement son entretien, et donc tant le maintien de la qualité des mesures sur le long terme que l'optimisation de son coût d'usage.

Le dispositif représenté sur la figure 2 représente un deuxième mode de réalisation dans lequel le concept du canon de réception monobloc a été encore plus poussé afin de simplifier encore la procédure de réglage et de réduire les coûts de production du dispositif.

Dans ce mode de réalisation, le premier canon d'émission 4, la cuve de mesure 8 et le canon de déclenchement 9 sont identiques au dispositif décrit figure 1.

Le deuxième canon d'émission 6 diffère en ce que la source laser 60 est dans l'exemple décrit ici une diode laser d'une puissance d'environ 10 mW. La faible puissance de 10mW permet de ne pas avoir de régulation thermique par effet Peltier, permettant ainsi de diminuer l'encombrement et les coûts. Néanmoins, afin d'augmenter la densité de puissance, la hauteur du faisceau lumineux dans la cuve de mesure a été diminué. Le faisceau lumineux de la diode laser est mis en forme par des lentilles anamorphiques pour que le faisceau soit elliptique en sortie du laser. Le faisceau laser est focalisé sur le flux de cellules biologique dans la cuve de mesure 8 grâce à la même optique de mise en forme 62.

Comme on le verra plus bas, afin de limiter la partie mobile du dispositif à une simple lentille, les canaux de détection 12, 14 et 16 présentent un axe commun qui comprend les filtres dichroïques 18 et 20, le filtre dichroïque 20 étant placé en amont du filtre dichroïque 18 pour garder le canal de détection 12 dans l'axe de la première source d'émission 4. Grâce à la réalisation de l'objectif de collection 11, la taille des filtres dichroïques 18 et 20 est inférieure à celle des filtres dichroïques du premier mode de réalisation, ce qui constitue une source d'économie conséquente ainsi qu'une miniaturisation du système optique qui est ainsi plus compact. De plus, étant donné que le réglage est réalisé via le canal de détection 12, le fait de rapprocher le détecteur 144 du détecteur 124 permet d'être plus précis sur la position du faisceau lumineux sur le détecteur 144. Le filtre dichroïque 18 est inchangé et le filtre dichroïque 20 est ici un filtre Semrock FF518-Di01 dont la longueur d'onde de séparation est 518nm. Ainsi, le rayonnement bleu est envoyé vers le canal de détection 16, le rayonnement vert vers le canal de détection 14, et le rayonnement rouge vers le canal de détection 12.

Grâce à la diminution de taille du faisceau, le canal de détection d'extinction 12 est simplifié afin de ne comprendre que la photodiode 126. En option, une lentille de focalisation et/ou un filtre passe-bande sensiblement centré sur la longueur d'onde d'émission de la source d'émission 40 peuvent être prévus.

De même, le canal de détection de fluorescence 14 est simplifié afin de ne comprendre qu'un filtre interférentiel Semrock FF01-550/49 (optionnel et non représenté) en entrée suivi d'une lentille de focalisation 140 qui focalise le faisceau sur le photomultiplicateur 144 qui est ici simplifié en un photomultiplicateur en silicium (SiPM).

Grâce à la diminution de taille du faisceau, le canal de détection de diffraction à 90° 16 est simplifié afin de ne comprendre que la photodiode 164. En option, une lentille de focalisation et/ou un filtre passe-bande centré sur la longueur d'onde de détection (par exemple un filtre Semrock FF01-482/35) peuvent être prévus.

Les miroirs dichroïques 18 et 20 et les filtres passe-bande étant fixés sur la même pièce mécanique (c'est-à-dire le canon de réception 10, hormis la lentille 112 mobile), la précision est augmentée. En effet, l'angle du filtre dichroïque est mieux contrôlé et les tolérances sont plus faibles.

Comme mentionné plus haut, le principal changement de ce mode de réalisation réside dans l'objectif de collection 11, qui est ici réalisé sous la forme de deux lentilles 110 et 112 en aval de la cuve de mesure 8, à proximité de celle-ci et dans l'axe d'émission du premier canal d'émission 4, un diaphragme 114, et une lentille 116 placée en aval du diaphragme 114 de sorte que ce dernier est à son plan focal.

La lentille 110 a une ouverture numérique élevée (ici de 0,6) et un diamètre important (25,4mm). Sa focale est assez importante pour laisser de la place entre la cuve de mesure et la lentille 110. Cela permet de faciliter l'accès à la cuve de mesure Le centre de la première surface de la lentille 110 étant situé à 4,6 mm de la cuve de mesure 8. La lentille 110 est dans l'exemple décrit une lentille asphérique, ce qui permet de limiter les aberrations sphériques.

La lentille 112 focalise ensuite le faisceau lumineux au niveau du diaphragme 114 qui assure un filtrage spatial, et le faisceau ainsi filtré est renvoyé à l'infini par la lentille 116 de diamètre 6mm. Le diaphragme 114 présente dans l'exemple décrit ici un diamètre de 1,5mm. La lentille 112 permet de diminuer la taille du faisceau lumineux afin d'obtenir un système optique plus compact et baisser le prix des éléments optiques.

La focalisation du faisceau après les lentilles 110 et 112 permet d'effectuer un filtrage spatial tout en diminuant la taille du faisceau lumineux. Les filtres et des détecteurs du reste du dispositif peuvent ainsi être choisis avec des tailles plus petites que précédemment et la mécanique est ainsi plus compacte. La focale et le diamètre de l'objectif élevés permettent de s'éloigner de la cuve de mesure 8 et ainsi de faciliter son accès notamment pour son remplacement.

Cette réalisation de l'objectif de collection 11 est en outre très avantageuse car elle permet un ajustement encore plus simple et fiable que dans le premier mode de réalisation. En effet, contrairement au cas du premier mode de réalisation où il était nécessaire de bouger l'ensemble du canon de réception 10 par rapport à la cuve de mesure 8, dans le cas du deuxième mode de réalisation, il n'est nécessaire de déplacer que la lentille 112 qui a été rendue mobile. Pour faire le réglage, la photodiode 126 du canal de détection 12 est retirée pour introduire un outil de réglage comprenant une lentille de focalisation, un diaphragme de diamètre 0,3mm et d'épaisseur 1mm placé au plan focal de la lentille de focalisation et la photodiode est remise en place. Comme le diamètre du diaphragme est très petit, il y a un seul point de fonctionnement quand le réglage est effectué, qui correspond au maximum d'intensité mesuré sur la photodiode. Pour ce faire, la position de la lentille 112 par rapport au diaphragme 114 est ajustée dans les trois axes. De plus, comme la photodiode 126 constitue l'électronique utilisée pour réaliser le réglage, celle-ci est fiable et simple à mettre en œuvre. L'ajout de l'outil de réglage permet aussi d'avoir un banc optique plus compact.

Le dispositif réalisé dans ce deuxième mode de réalisation est plus compact, moins cher à produire que le premier mode de réalisation. Il présente néanmoins les mêmes avantages d'accessibilité de la cuve de mesure, et surtout sa conception mécanique est nettement simplifiée car la lentille 112 est la seule pièce mobile du dispositif.

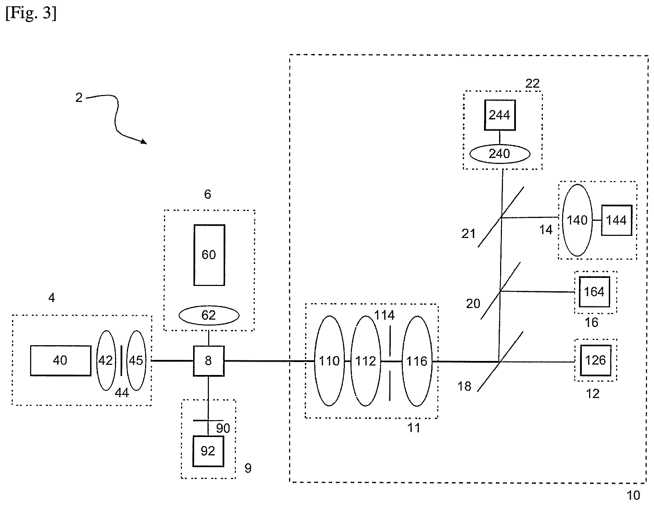

Le dispositif représenté sur la figure 3 représente un troisième mode de réalisation dans lequel deux signaux de fluorescences sont mesurés. Tout en ajoutant une mesure, le concept du canon de réception monobloc est toujours primordial.

Dans ce mode de réalisation, le premier canon d'émission 4, la cuve de mesure 8 et le canon de déclenchement 9 sont identiques à ceux des dispositifs des figures 1 et 2. Le canon d'émission 6 peut soit être identique à celui du dispositif de la figure 1, soit être identique à celui du dispositif de la figure 2. Ce choix peut dépendre de l'énergie lumineuse nécessaire dans la cuve de mesure, par exemple en fonction des anticorps et du fluorochrome utilisé.

Dans ce mode de réalisation, l'objectif 11 et le réglage du canon de réception sont identiques à ceux du dispositif de la figure 2.

Le filtre dichroïque 18 est inchangé, le filtre dichroïque 20 est ici un filtre Semrock FF500-Di01 dont la longueur d'onde de séparation est 500nm. Dans cette configuration, un filtre dichroïque est ajouté, le filtre Semrock FF555-Di03 dont la longueur d'onde de séparation est centrée sur 555nm. Ainsi le rayonnement bleu est envoyé vers le canal de détection 16, le rayonnement vert vers le canal de détection 14, le rayonnement jaune vers le canal de détection 22 et le rayonnement rouge vers le canal de détection 12.

Le canal de détection d'extinction 12, l'objectif 11, le canal de détection de diffraction à 90° 16, ainsi que le réglage du banc optique sont identiques à ceux du dispositif de la figure 2. Concernant le canal de détection de fluorescence 14, il est identique à celui la figure 2, sauf en ce que le détecteur utilisé est un photomultiplicateur ou un photomultiplicateur en silicium (SiPM).

Le dispositif comprend en outre un canal de détection de fluorescence 22 qui comprend un filtre interférentiel FF01-585/40 (optionnel et non représenté) en entrée suivi d'une lentille de focalisation 240 identique à la lentille 140 qui focalise le faisceau sur le photomultiplicateur ou sur un photomultiplicateur en silicium (SiPM) 244.

Des configurations ont été décrites plus haut en rapport à des pièces dont les références précises ont été fournies. Il va de soi que l'invention n'est pas limitée à ces pièces uniquement, et que d'autres éléments comparables pourraient être utilisés que l'homme du métier saura choisir et adapter le cas échéant, tant concernant les longueurs d'onde des lasers, les filtres, les optiques, objectifs ou lentilles que les détecteurs. De plus, le canon de déclenchement pourrait également servir à faire de la mesure de diffraction dans l'axe pour réaliser des mesures sur la taille. Il doit également être noté que les modes de réalisation décrits ci-dessus permettent d'utiliser les deux canaux d'émissions ensemble, ce qui permet de réaliser toutes les mesures simultanément. Cela permet d'obtenir un système dans lequel la cadence de mesure est plus élevée. En variante, les canons d'émission pourraient être activés séquentiellement. De plus, dans ce qui précède et dans les revendications, le faisceau peut être décalé de manière subséquente par un ou plusieurs miroirs notamment lorsqu'il est mentionné qu'un faisceau est sensiblement collimaté selon un axe.

## Revendications

1. Dispositif électro-optique de mesures en flux comprenant une cuve de mesure (8) dans laquelle circule un flux de fluide à caractériser, au moins deux canons d'émission (4, 6) de lumière présentant des spectres disjoints, un canon de déclenchement (9) permettant la mesure de la diffraction aux petits angles et un canon de réception (10) permettant de réaliser une mesure d'extinction et au moins une fluorescence, le dispositif électro-optique étant tel que :
- le premier canon d'émission (4) comprend une source lumineuse (40) présentant la longueur d'onde centrale supérieure à 580nm et définissant un axe optique principal perpendiculaire au flux de fluide,
- le deuxième canon d'émission (6) comprend une seconde source lumineuse (60), présentant une longueur d'onde centrale inférieure à 580nm et définissant un axe optique secondaire sensiblement orthogonal à l'axe optique principal et au flux de fluide,
- le premier canon d'émission (4) et le deuxième canon d'émission (6) sont disposés d'un côté de la cuve de mesure (8), le canon de réception (10) est disposé de l'autre côté de la cuve de mesure (8) selon l'axe optique principal, et le canon de déclenchement (9) est disposé de l'autre côté de la cuve de mesure (8) selon l'axe optique secondaire,
- le canon de réception (10) comprend un canal de détection (12) pour mesurer l'extinction et au moins un canal de détection (14) pour mesurer au moins un signal de fluorescence, ainsi qu'un unique objectif de collection (11) du faisceau provenant de l'interaction du faisceau lumineux entre le premier canon d'émission (4) et le deuxième canon d'émission (6) et les particules dans le flux de fluide, lequel objectif de collection (11) est agencé de sorte que le faisceau lumineux qu'il transmet est un faisceau substantiellement collimaté selon l'axe optique principal vers le canal de détection (12) pour mesurer l'extinction, le canon de réception (10) formant un seul bloc mécanique dont une partie au moins est mobile par rapport à la cuve de mesure (8),
le canon de réception (10) comprenant en outre un premier miroir dichroïque (18) placé en aval de l'objectif de collection (11) là où le faisceau lumineux est substantiellement collimaté, agencé pour transmettre partiellement le faisceau lumineux issu de l'interaction entre le premier canon d'émission (4) et les particules dans le flux de fluide vers le canal de détection (12) pour mesurer l'extinction, et pour réfléchir partiellement le faisceau lumineux issu de l'interaction entre le deuxième canon d'émission (6) et les particules dans le flux de fluide vers au moins un canal de détection (14) pour mesurer au moins un signal de fluorescence.

2. Dispositif électro-optique de mesures en flux selon la revendication 1, dans lequel le canon de réception (10) comprend un canal de détection (16) pour mesurer la diffraction aux grands angles et un second miroir dichroïque (20) placé en aval de l'objectif de collection (11) et agencé pour réfléchir partiellement le faisceau lumineux issu de l'interaction entre le deuxième canon d'émission (6) et les particules dans le flux de fluide vers au moins un parmi l'au moins un canal de détection (14) pour mesurer la fluorescence et le canal de détection (16) pour mesurer la diffraction aux grands angles.

3. Dispositif selon la revendication 1 ou 2, dans lequel le canal de détection (12) pour mesurer l'extinction comprend un détecteur (126) agencé pour mesurer une quantité de lumière rouge, l'au moins un canal de détection (14) pour mesurer au moins une fluorescence comprenant un détecteur (144) agencé pour mesurer une quantité de lumière verte et une quantité de lumière orange ou proche infrarouge, et le canal de détection (16) pour mesurer la diffraction aux grands angles comprend un détecteur (164) agencé pour mesurer une quantité de lumière bleue.

4. Dispositif électro-optique de mesures en flux selon la revendication 3, dans lequel le détecteur (126) agencé pour mesurer une quantité de lumière rouge est une photodiode, le détecteur (144) agencé pour mesurer une quantité de lumière verte est un photomultiplicateur ou un photomultiplicateur en silicium, et le photodétecteur (164) agencé pour mesurer une quantité de lumière bleue est une photodiode.

5. Dispositif électro-optique de mesures en flux selon l'une des revendications 1 à 4, dans lequel le canon de réception (10) est monobloc et est mobile intégralement par rapport à la cuve de mesure (8).

6. Dispositif électro-optique de mesures en flux selon la revendication 5, dans lequel le deuxième miroir dichroïque (20) est placé en aval du premier miroir dichroïque (18) dans le trajet du faisceau réfléchi et est agencé pour réfléchir partiellement celui-ci vers le canal de détection (14) pour mesurer la fluorescence et pour transmettre partiellement celui-ci vers le canal de détection (16) pour mesurer la diffraction aux grands angles.

7. Dispositif électro-optique de mesures en flux selon la revendication 6, dans lequel le canal de détection (12) pour mesurer l'extinction, un ou plusieurs canaux de détection (14) pour mesurer un ou plusieurs signaux de fluorescence et le canal de détection (16) pour mesurer la diffraction aux grands angles comprennent chacun une optique (122, 140, 160) suivie d'un diaphragme (124, 142, 162) en amont de leur détecteur (126, 144, 164) respectif.

8. Dispositif électro-optique de mesures en flux selon l'une des revendications 1 à 4, dans lequel l'objectif de collection (11) comprend deux lentilles (110, 112) dont l'une est mobile par rapport à la cuve de mesure (8), le reste du canon de réception (10) ne présentant pas de mobilité par rapport à la cuve de mesure (8), et un diaphragme (114) disposé en aval des deux lentilles (110, 112).

9. Dispositif électro-optique de mesures en flux selon la revendication 8, dans lequel le deuxième miroir dichroïque (20) est placé en amont du premier miroir dichroïque (18) dans le trajet du faisceau réfléchi et est agencé pour réfléchir partiellement celui-ci vers le canal de détection (16) pour mesurer la diffraction aux grands angles et pour transmettre partiellement celui-ci vers le premier miroir dichroïque (18).

10. Dispositif électro-optique de mesures en flux selon l'une des revendications précédentes, dans lequel le premier canon d'émission (4) comprend une première source d'émission (42) qui est une LED rouge.

11. Dispositif électro-optique de mesures en flux selon l'une des revendications précédentes, dans lequel le deuxième canon d'émission (6) comprend une deuxième source d'émission (62) qui est un laser bleu.

12. Dispositif électro-optique de mesures en flux selon l'une des revendications précédentes, comprenant en outre un ou plusieurs éléments de réglage agencés pour permettre le réglage du dispositif par déplacement de tout ou partie du canon de réception (12) et mesure dans le canal de détection (12).

13. Dispositif électro-optique de mesures en flux selon l'une des revendications précédentes, comprenant en outre un ou plusieurs miroirs agencés pour décaler un ou plusieurs faisceaux substantiellement collimatés.

## Patentansprüche

1. Elektrooptische Durchflussmessvorrichtung mit einem Messbehälter (8), in dem ein zu charakterisierender Fluidstrom zirkuliert, wenigstens zwei Lichtemissionskanonen (4, 6) mit getrennten Spektren, eine Auslösekanone (9), die die Messung der Beugung bei kleinen Winkeln ermöglicht, und eine Empfangskanone (10), die eine Messung der Extinktion und wenigstens einer Fluoreszenz ermöglicht, wobei die elektrooptische Vorrichtung wie folgt beschaffen ist:
- die erste Emissionskanone (4) umfasst eine Lichtquelle (40), die eine zentrale Wellenlänge von mehr als 580 nm aufweist und eine zum Fluidstrom senkrechte optische Hauptachse definiert,
- die zweite Emissionskanone (6) umfasst eine zweite Lichtquelle (60), die eine zentrale Wellenlänge von weniger als 580 nm aufweist und eine sekundäre optische Achse definiert, die im Wesentlichen orthogonal zur optischen Hauptachse und zum Fluidstrom ist,
- die erste Emissionskanone (4) und die zweite Emissionskanone (6) sind auf einer Seite des Messbehälters (8) angeordnet, die Empfangskanone (10) ist auf der anderen Seite des Messbehälters (8) entlang der optischen Hauptachse angeordnet und die Auslösekanone (9) ist auf der anderen Seite des Messbehälters (8) entlang der optischen Nebenachse angeordnet,
- die Empfangskanone (10) umfasst einen Detektionskanal (12) zum Messen der Extinktion und wenigstens einen Detektionskanal (14) zum Messen wenigstens eines Fluoreszenzsignals sowie ein einziges Sammelobjektiv (11) für den Strahl, der aus der Wechselwirkung des Lichtstrahls zwischen der ersten Emissionskanone (4) und der zweiten Emissionskanone (6) und den Partikeln im Fluidstrom stammt, wobei das Sammelobjektiv (11) derart angeordnet ist, dass der von ihr durchgelassene Lichtstrahl ein im Wesentlichen kollimierter Strahl entlang der optischen Hauptachse zum Detektionskanal (12) zur Messung der Extinktion ist, wobei die Empfangskanone (10) eine einzige mechanische Einheit bildet, von der wenigstens ein Teil relativ zum Messbehälter (8) beweglich ist, wobei die Empfangskanone (10) ferner einen ersten dichroitischen Spiegel (18) umfasst, der stromabwärts des Sammelobjektivs (11) angeordnet ist, wo der Lichtstrahl im Wesentlichen kollimiert ist, und dazu angeordnet ist, den Lichtstrahl, der aus der Wechselwirkung zwischen der ersten Emissionskanone (4) und den Partikeln im Fluidstrom stammt, zum Detektionskanal (12) zu übertragen, um die Extinktion zu messen, und um den Lichtstrahl, der aus der Wechselwirkung zwischen der zweiten Emissionskanone (6) und den Partikeln im Fluidstrom stammt, teilweise zu reflektieren, um wenigstens ein Fluoreszenzsignal zu messen.

2. Elektrooptische Durchflussmessvorrichtung nach Anspruch 1, wobei die Empfangskanone (10) einen Detektionskanal (16) zum Messen der Weitwinkelbeugung und einen zweiten dichroitischen Spiegel (20) umfasst, der stromabwärts des Sammelobjektivs (11) angeordnet ist und dazu angeordnet ist, den Lichtstrahl, der aus der Wechselwirkung zwischen der zweiten Emissionskanone (6) und den Partikeln im Fluidstrom stammt, teilweise in den wenigstens einen Detektionskanal (14) zur Messung der Fluoreszenz und den Detektionskanal (16) zum Messen der Weitwinkelbeugung zu reflektieren.

3. Vorrichtung nach Anspruch 1 oder 2, wobei der Detektionskanal (12) zum Messen der Extinktion einen Detektor (126) umfasst, der dazu angeordnet ist, eine Menge an rotem Licht zu messen, wobei der wenigstens eine Detektionskanal (14) zum Messen von wenigstens einer Fluoreszenz einen Detektor (144) umfasst, der zum Messen einer Menge an grünem Licht und einer Menge an orangefarbenem oder nahinfrarotem Licht angeordnet ist, und der Detektionskanal (16) zum Messen der Weitwinkelbeugung einen Detektor (164) umfasst, der zum Messen einer Menge an blauem Licht angeordnet ist.

4. Elektrooptische Durchflussmessvorrichtung nach Anspruch 3, wobei der Detektor (126), der zum Messen einer Menge an rotem Licht angeordnet ist, eine Fotodiode ist, der Detektor (144), der zum Messen einer Menge an grünem Licht angeordnet ist, ein Photomultiplier oder ein Silizium-Photomultiplier ist, und der Photodetektor (164), der zum Messen einer Menge an blauem Licht angeordnet ist, eine Photodiode ist.

5. Elektrooptische Durchflussmessvorrichtung nach einem der Ansprüche 1 bis 4, wobei die Empfangskanone (10) einteilig ist und in Bezug auf den Messbehälter (8) als Ganzes beweglich ist.

6. Elektrooptische Durchflussmessvorrichtung nach Anspruch 5, wobei der zweite dichroitische Spiegel (20) stromabwärts des ersten dichroitischen Spiegels (18) im Weg des reflektierten Strahls angeordnet ist und dazu angeordnet ist, diesen teilweise zum Detektionskanal (14) zur Messung der Fluoreszenz zu reflektieren und teilweise zum Detektionskanal (16) zum Messen der Weitwinkelbeugung durchzulassen.

7. Elektrooptische Durchflussmessvorrichtung nach Anspruch 6, wobei der Detektionskanal (12) zum Messen der Extinktion, ein oder mehrere Detektionskanäle (14) zum Messen eines oder mehrerer Fluoreszenzsignale und der Detektionskanal (16) zum Messen der Weitwinkelbeugung jeweils eine Optik (122, 140, 160) umfasst, gefolgt von einer Blende (124, 142, 162) vor ihrem jeweiligen Detektor (126, 144, 164).

8. Elektrooptische Durchflussmessvorrichtung nach einem der Ansprüche 1 bis 4, wobei das Sammelobjektiv (11) zwei Linsen (110, 112) umfasst, von denen eine relativ zum Messbehälter (8) beweglich ist, während der Rest der Empfangskanone (10) in Bezug auf den Messbehälter (8) nicht beweglich ist, und eine Blende (114) stromabwärts der beiden Linsen (110, 112) angeordnet ist.

9. Elektrooptische Durchflussmessvorrichtung nach Anspruch 8, wobei der zweite dichroitische Spiegel (20) stromaufwärts des ersten dichroitischen Spiegels (18) im Strahlengang des reflektierten Strahls platziert ist und dazu angeordnet ist, diesen teilweise zum Detektionskanal (16) zu reflektieren, um die Weitwinkelbeugung zu messen, und ihn teilweise zum ersten dichroitischen Spiegel (18) durchzulassen.

10. Elektrooptische Durchflussmessvorrichtung nach einem der vorhergehenden Ansprüche, wobei die erste Emissionskanone (4) eine erste Emissionsquelle (42) umfasst, die eine rote LED ist.

11. Elektrooptische Durchflussmessvorrichtung nach einem der vorhergehenden Ansprüche, wobei die zweite Emissionskanone (6) eine zweite Emissionsquelle (62) umfasst, die ein blauer Laser ist.

12. Elektrooptische Durchflussmessvorrichtung nach einem der vorhergehenden Ansprüche, die ferner ein oder mehrere Einstellelemente umfasst, die dazu angeordnet sind, die Einstellung der Vorrichtung durch Verschieben der gesamten oder eines Teils der Empfangskanone (12) und die Messung im Detektionskanal (12) zu ermöglichen.

13. Elektrooptische Durchflussmessvorrichtung nach einem der vorhergehenden Ansprüche, die ferner einen oder mehrere Spiegel umfasst, die dazu angeordnet sind, einen oder mehrere im Wesentlichen kollimierte Strahlen zu verschieben.

## Claims

1. Electro-optical device for taking measurements of flow, comprising a measurement tank (8) through which a flow of fluid to be characterised flows, at least two guns (4, 6) for emitting light having separate spectra, a triggering gun (9) allowing small-angle diffraction to be measured and a receiving gun (10) allowing a measurement of attenuation and at least one fluorescence to be taken, the electro-optical device being such that:
- the first emitting gun (4) comprises a light source (40) having the centre wavelength greater than 580 nm and defining a main optical axis perpendicular to the flow of fluid,
- the second emitting gun (6) comprising a second light source (60), having a centre wavelength of less than 580 nm and defining a secondary optical axis substantially orthogonal to the main optical axis and to the flow of fluid,
- the first emitting gun (4) and the second emitting gun (6) are disposed on one side of the measurement tank (8), the receiving gun (10) is disposed on the other side of the measurement tank (8) along the main optical axis, and the triggering gun (9) is disposed on the other side of the measurement tank (8) along the secondary optical axis,
- the receiving gun (10) comprises a detection channel (12) for measuring the attenuation and at least one detection channel (14) for measuring at least one fluorescence signal, as well as a single objective (11) for collecting the beam coming from the interaction of the light beam between the first emitting gun (4) and the second emitting gun (6) and the particles in the flow of fluid, said collecting objective (11) being arranged so that the light beam that it transmits is a beam substantially collimated along the main optical axis towards the detection channel (12) for measuring the attenuation, the receiving gun (10) forming a single mechanical unit at least a part of which is able to move with respect to the measurement tank (8),
the receiving gun (10) furthermore comprising a first dichroic mirror (18) placed downstream of the collecting objective (11) where the light beam is substantially collimated, arranged for partially transmitting the light beam resulting from the interaction between the first emitting gun (4) and the particles in the flow of fluid towards the detection channel (12) for measuring the attenuation, and for partially reflecting the light beam resulting from the interaction between the second emitting gun (6) and the particles in the flow of fluid towards at least one detection channel (14) for measuring at least one fluorescence signal.

2. Electro-optical device for taking measurements of flow according to claim 1, wherein the receiving gun (10) comprises a detection channel (16) for measuring the large-angle diffraction and a second dichroic mirror (20) placed downstream of the collecting objective (11) and arranged to partially reflect the light beam resulting from the interaction between the second emitting gun (6) and the particles in the flow of fluid towards at least one from the at least one detection channel (14) for measuring the fluorescence and the detection channel (16) for measuring the large-angle diffraction.

3. Device according to claim 1 or 2, wherein the detection channel (12) for measuring attenuation comprises a detector (126) arranged for measuring a quantity of red light, the at least one detection channel (14) for measuring at least one fluorescence comprising a detector (144) arranged for measuring a quantity of green light and a quantity of orange light or near infrared, and the detection channel (16) for measuring large-angle diffraction comprises a detector (164) arranged for measuring a quantity of blue light.

4. Electro-optical device for taking measurements of flow according to claim 3, wherein the detector (126) arranged for measuring a quantity of red light is a photodiode, the detector (144) arranged for measuring a quantity of green light is a photomultiplier or a silicon photomultiplier, and the photodetector (164) arranged for measuring a quantity of blue light is a photodiode.

5. Electro-optical device for taking measurements of flow according to one of claims 1 to 4, wherein the receiving gun (10) is in a single piece and is able to move integrally with respect to the measurement tank (8).

6. Electro-optical device for taking measurements of flow according to claim 5, wherein the second dichroic mirror (20) is placed downstream of the first dichroic mirror (18) in the path of the reflected beam and is arranged for partially reflecting the latter towards the detection channel (14) to measure the fluorescence and to partially transmit it to the detection channel (16) to measure the large-angle diffraction.

7. Electro-optical device for taking measurements of flow according to claim 6, wherein the detection channel (12) for measuring attenuation, one or more detection channels (14) for measuring one or more fluorescence signals and the detection channel (16) for measuring large-angle diffraction each comprise an optic (122, 140, 160) followed by a diaphragm (124, 142, 162) upstream of their respective detector (126, 144, 164).

8. Electro-optical device for taking measurements of flow according to one of claims 1 to 4, wherein the collecting objective (11) comprises two lenses (110, 112), one of which is able to move with respect to the measurement tank (8), the remainder of the receiving gun (10) not having mobility with respect to the measurement tank (8), and a diaphragm (114) disposed downstream of the two lenses (110, 112).

9. Electro-optical device for taking measurements of flow according to claim 8, wherein the second dichroic mirror (20) is placed upstream of the first dichroic mirror (18) in the path of the reflected beam and is arranged for partially reflecting the latter towards the detection channel (16) to measure the large-angle diffraction and to partially transmit it to the first dichroic mirror (18).

10. Electro-optical device for taking measurements of flow according to one of the preceding claims, wherein the first emitting gun (4) comprises a first emission source (42) that is a red LED.

11. Electro-optical device for taking measurements of flow according to one of the preceding claims, wherein the second emitting gun (6) comprises a second emission source (62) that is a blue laser.

12. Electro-optical device for taking measurements of flow according to one of the preceding claims, further comprising one or more adjustment elements arranged for allowing the adjustment of the device by moving all or part of the receiving gun (12) and measurement in the detection channel (12).

13. Electro-optical device for taking measurements of flow according to one of the preceding claims, further comprising one or more mirrors arranged for offsetting one or more substantially collimated beams.
